# EUROPEAN PATENT APPLICATION

(11) **EP 3 588 377 A1**
(43) Date of publication of application: **01.01.2020**
(21) Application number: 18721426.7
(22) Date of filing: 21.02.2018
(51) Int. Cl.: G06K 9/20, G06K 9/62, G06Q 10/06

(54) **METHOD, SYSTEM AND COMPUTER PROGRAM FOR AUTOMATIC REFEREEING**

(30) Priority: 23.02.2017 ES 201730234
(71) Applicant: Foxtenn Bgreen, S.L., 08008 Barcelona (ES)
(72) Inventor: SIMÓN VILAR, Javier, 08008 Barcelona (ES)
(74) Representative: Gallego Jiménez, José Fernando
(86) International application number: PCT/ES2018/070124
(87) International publication number: WO 2018/154162

(57) **Abstract**

The proposed method, system and arbitration program includes acquiring data (30) including position and time information relative to various game elements (40) simultaneously through a network of remote sensors (10); analyzing the data (30) acquired by detecting the presence of data groups (31) relating to game elements (40) and identifying the game element (40) to which they correspond; detecting game events (50) of various game elements (40) and detecting game milestones by automatically detecting a sequence of game events (50) by triggering a notification signal (21).

## Description

### Field of the invention

The present invention relates to an automatic arbitration, or arbitration assistance, method, a system and a computer program implemented by means of a network of sensors that includes remote position sensors and by means of at least one control device capable of analyzing the data sequences obtained by said network of sensors, allowing the data sequences to be grouped into data sets and assign them to a game element, mobile or fixed, to which the data sequences refer to, identified from said analysis. The analysis of the data sets also allows the identification of game events of each game element generating a temporary record that can serve as arbitration assistance or that allows to automatically detect sequences of game events identifying game milestones.

In other words, the proposed system automatically identifies and detects the position of the different game elements present in the game field by means of remote sensors to later detect the interactions between the different game elements, for example the contact between two of those game elements, thus detecting game events. In addition, the correlation of the different game events allows the system to identify game milestones related to the rules of the game, for example detecting in soccer an offside based on the correlation of two different events corresponding to a pass of the ball and the position between the attacker receiving the pass and a defense.

These game milestones correspond to relevant arbitration actions of a game or sport, so that its automatic detection provides an arbitration assistance. It is also proposed that when the system produces said detection, an alarm signal warning of said detection is generated.

### Background of the invention

Some methods, computer programs and automatic arbitration assistance systems are known in the state of the art.

Document US20150018990A1 captures images through video cameras that it later analyzes by detecting different objects and detecting different events related to said objects, creating a statistic. However, said document does not describe the detection of sequences of events that determine a game milestone, whether the use of remote position sensors that offer information of the three-dimensional shape of the captured objects or information of their position that allows detection of impact moments between said elements with sufficient precision to determine whether or not the detected events occur simultaneously or in a specific order determining a game milestone.

Document WO2016157152 describes a system that, by analyzing visual information obtained from cameras, allows determination of the three-dimensional position of a ball and players present in the game area, as well as calculation of the trajectory of said ball by determining the point of impact between the ball and the player, as well as the point of impact of the ball on the game area. However, said document does not anticipate the disaggregation of the information captured by differentiating between the different game elements present in the captured images, nor the detection of milestones defined by a sequence of events, nor the use of precise position detection systems such as scanning lasers, radars, or three-dimensional video sensors.

Document US7796162 describes the use of video cameras, which optionally can also incorporate a laser sensor, for the detection of the movement of game elements, but in no case suggests the use of position sensors that provide information indicative of the three-dimensional shape of the analyzed game element, neither the detection of game events nor game milestones composed of a certain sequence of game events.

Document CN105536233 describes the installation of laser emitters and cameras around a game area, however it also requires the installation of sensors, emitters and laser reflectors on a belt placed on players. The system described does not propose the automatic detection of game events or game milestones defined by sequences of game events.

Document ES2427489, from the same inventor, describes the use of laser scanners to make a prediction of a trajectory of the ball, and by means of video sensors capturing images of the impact of said ball on the impact area to allow a referee to determine whether the ball is inside or outside of that line. However, said system does not describe the automatic detection of a game milestone defined by a sequence of game events, as it would be in this case to determine when the ball has hit the ground and if the ball is inside or outside of the line at said moment, together with other possible previous events. Said document does not anticipate disaggregation of the information obtained by the sensors in different data groups, each one relating to a game element to be analyzed, since only the analysis of the trajectory of the ball is considered.

Document US2013066448 describes the incorporation of sensors in the game elements that allow their identification or the detection of their position, movement, etc. The data provided by these sensors allows performing statistics, detecting actions of the game such as a goal, or guidance of the cameras. However, in document US2013066448 the inclusion of said sensors integrated in the game elements is essential.

Document EP2150057 also describes the incorporation of sensors in the game elements but also mentions, in a generic way, that the position of the game elements can be obtained by means of triangulation techniques applied to the analysis of the images. The system described in this document EP2150057, however, cannot identify the game elements without the assistance of the integrated sensors, said sensors being therefore essential.

Document US2003054905 also describes as essential the integration of sensors in the game elements to allow their identification and the detection of their position and movement, said sensors also being essential.

Document WO2017011811 describes a system in which integrated sensors are incorporated into the game elements for obtaining motion capture data of said game element. It also mentions the possibility that said sensors incorporate external visible marks for detection by cameras that, by means of triangulation techniques, can determine their position. However, in this document the identification of game elements by means of data obtained from a distance is not mentioned, therefore the use of the sensors integrated in the game elements for their identification and for the detection of their movement is essential in document WO2017011811.

### Brief description of the invention

The present invention relates to an automatic arbitration method, a computer program that implements said method, and may even concern a system in which to implement said method. The aforementioned method, system or program does not require the installation of sensors or reflectors or emitters of any kind on the players present in the game area, which could interfere with their freedom of movement or induce injuries.

The present invention allows analysis of the development of a game or sport in a game field by automatically detecting game events and relevant game milestones for the development of said game produced in relation to game elements.

Non-limiting examples of said game or sport may be team sports such as soccer, American football, rugby, basketball, baseball, cricket, hockey, volleyball, handball, water polo, or one player sports against other players, such as tennis, table tennis, paddle, racquetball, athletics, sports such as racing, jumping, shot put, or sports with quality evaluation in the precision of the development of routines, such as rhythmic gymnastics, trampoline jumping, synchronized swimming, rings, rods, vaulting-horse, etc. Even other disciplines such as bowling, figure skating or ballroom dancing may be susceptible of implementation of the present method.

It will be understood that the aforementioned game elements refer to those elements that intervene in the game. Examples of said game elements may be, but not limited to, a ball, a racket, a bat, a net, but also the players and the different parts of their body, so a player's foot, a hand, an elbow, a head, the torso, etc. will be considered game elements. Static elements can also be considered as game elements, such as a mast for a goal, a rim of a basketball hoop, etc. Preferably, data relating to at least two mobile game elements will be analyzed.

The said game events detected by the present invention refer to relevant acts that occur at a particular moment during the development of the game, and which may be indicative of a game milestone if they occur in correspondence with other game events, either in simultaneity or later.

The examples of such game events can be very varied, and depend largely on the game or sport analyzed, however for the sake of clarity we proceed to list some non-limiting examples of possible game events detected, such as contact between a foot, a hand, a racket or a bat with a ball, the contact between a foot and the ground, the relative position between two game elements, such as between the most advanced body part of two runners, or between an attacker and a defense, or even the relative position between two body parts of the same player, such as the aligned position of a gymnast's arms. The relative position between game elements and limits of the game area can also be considered game events.

A game milestone however will be determined by a set of game events. Examples of game milestones will be for example a valid goal, a null goal, a valid basket, a null basket, a three-pointer, an offside, a penalty, an out-of-band, a fault kick or a null penalty, etc. These game milestones will or will not be determined based on a succession of detected game events. For example, in the context of a soccer game, an offside will require detecting the game event of the kick of the ball by the midfielder and the detection of the game event of the advancement of the defense with respect to the attacker, and the order of said two game events will determine the game milestone of the offside, a valid goal will be detected when the game event of the entry of the ball into the goal occurs and no previous game events that determine an offside occur, penalty, out-of-band, etc. In basketball, a game event will be the player's jump with the ball in the hand outside the three-point line, and another game event will be the entrance of the ball inside the hoop, thus detecting a three-pointer milestone.

Thus, the present invention concerns, according to a first aspect, a method implemented by means of a system that includes at least:
- a network of sensors including remote position sensors arranged around a game area and directed towards game elements within said game area;
- at least one control device equipped with a memory and computing power for the analysis of the information obtained from the network of sensor;

Said remote position sensors will be understood to be sensors capable of remotely obtaining positional information of a game element, from outside the game area.

Said at least one control device will be for example a programmable logic controller, a computer, or the like, said control device being able to be local or remote with respect to said network of sensors, said at least one control device receiving the data acquired by said network of sensors through a data connection that can also be wireless.

The proposed method includes the following steps:
by means of said network of sensors:
   a) acquire data relating to several game elements simultaneously, said data including positional information, time information, and information indicative of the three-dimensional shape of the game elements;
and through an analysis of the acquired data executed by the at least one control device through the application of analysis algorithms:
   b) analyze the data obtained from each individual sensor by detecting the presence of data groups relating to game elements and identifying the game element to which said data groups correspond, by placing said data groups in correspondence with the same game element;
   c) group in a temporal sequence all the data groups provided by different sensors corresponding to the same game element in temporal coordination;
   d) detect game events of several game elements in several temporal sequences of data groups by:
      - the detection of changes in position, shape, speed and / or trajectory of the game elements in the temporal sequences of data groups;
      - the detection of interferences or correlation between different game elements in the temporal sequences of data groups;
   or a combination thereof,
e) detect game milestones by automatically detecting sequences of game events, simultaneous or consecutive, coinciding with sequences of game events pre-stored in the memory corresponding to possible game milestones, triggering a notification signal.

The sequences of pre-stored game events corresponding to possible game milestones are the game structures encoded within the system in the form of sequences of events with a certain temporal correlation with each other. In other words, a game structure is introduced and stored within the system in the form of a sequence of events. When the system detects those related events from the stored mode, the existence of that particular milestone is determined.

For example, in the case of basketball, the rules of the game indicate that it is forbidden to take more than two steps without throwing the ball, which is known as travelling. This game structure can be stored in the system in the form of a sequence of events, for example:
EVENT 1: the ball is in contact with the hands of a player
EVENT 2: first step of that player
EVENT 3: second step of that player

If these events are detected in this order without the ball leaving the player's hands, the system determines that there is a milestone corresponding to travelling. However, if between event 2 and event 3 an additional event is detected corresponding to the fact that the ball is no longer in contact with the player's hands, either due to a pass of the ball, a kick, a bounce, etc., that sequence of events will not have been fulfilled and therefore the system will determine that the travelling milestone has not existed.

Thus, during step a) of the method, data relating to the different game elements existing in the game area are captured, preferably by obtaining data from each individual game element simultaneously from at least several remote position sensors placed in different positions around the game area, thus allowing data of each game element to be obtained from different angles simultaneously preventing a game element from stopping to capture data from another game element by hiding it from a remote position sensor.

Preferably data will be obtained from all existing game elements in the game area.

During step b) the data obtained from each individual sensor is analyzed and data groups related to a single game element are identified from the data obtained from said sensor. For example, a sensor can obtain simultaneous data of several game elements, for example of several players next to each other, or of several parts of the body of the same player as his feet, knees and hands, or of a ball and a foot, etc., the analysis of step b) makes it possible to discern among all the data obtained by said individual sensor the data groups that refer to each of said different game elements, and allows identification of which game element they refer to. That is to say that step b) makes it possible to isolate, from all the data obtained, those data constituting of a data group obtained for a single game element, and also allows identification of which game element they correspond to, for example, identifying whether they are a data group relating to a ball, a bat, a racket, a foot of a defense, etc.

By way of example, during said step b) two scanning lasers and two cameras each obtain data of the different game elements relating to two players and one ball, i.e. four feet, four hands, two torsos, two heads, and the aforementioned ball, from different points. During step b) said game elements are detected and identified and the data groups of each game element obtained by each of the sensors are isolated, that is to say, what data obtained is referred to the right foot of the first player, what data refers to the ball, etc.

Said detection and identification can be done for example by means of a detection of the shape of said game elements by means of an analysis of the positional data of a mesh of points of each game element, which provides information of the three-dimensional shape thereof, said detected shape can be compared with a pre-stored record, i.e. for example it can be detected that a spherical element is the ball. Alternatively, said identification can be obtained by means of a color analysis and two-dimensional shape of the images obtained by the cameras, for example if it is round and white it is the ball. This analysis can also identify if a player is from one team or another, and therefore identifying their game elements, such as feet, depending on the color of their clothing. Another alternative is the detection of characteristic movements of said game element, for example that of the footsteps. A game element can also be detected because it is different from the data obtained at another moment in that same position, or because it is different from the background of the game area.

Preferably, said identification of the game elements is produced by means of an artificial intelligence system, implemented and executed in the control device, which has been previously trained for this task by means of deep learning techniques also called machine learning.

The deep learning techniques consist of providing the artificial intelligence system with access to multiple examples of the task to be performed so that it automatically identifies common patterns that allow the system to perform such identification by detecting these common patterns in any case or example to be analyzed.

In the present case, the artificial intelligence system will be trained to detect and identify all the possible game elements present in the game area from the data provided by the network of sensors. This will allow the flow of data generated by the network of sensors to be analyzed, preferably in real time, by the artificial intelligence system identifying each of said game elements.

The identified game elements may not only be isolated elements, but also parts of larger sets may be identified as game elements. For example, the different parts of the body of a player can be considered each as a game element and be individually identified by the artificial intelligence system.

It is proposed, as an optional feature, that the artificial intelligence system be trained to also perform a biomechanical analysis of the players, that is to say that it is proposed that artificial intelligence be trained not only to individually detect each part of a player's body, but also to generate an analysis of the relationship between said body parts, producing for example a virtual recreation of a simplified skeleton of the player that will become part of the data groups obtained from the different sensors, allowing analysis of the biomechanical behavior of the players requiring much less computing power than if it were made from all sensor data, or simplifying the grouping of the data referring to the same player obtained from different sensors of the network of sensors, grouping them all around the same simplified virtual skeleton.

Step c) groups all the data groups obtained from different sensors of the network of sensors and identified as relating to the same game element, creating temporal sequences of data groups, each time sequence relating to a single game element, coordinating said data groups obtained from different sensors over time, obtaining a record of all the data groups acquired simultaneously referring to the same game element. This makes it possible to coordinate the acquired data from different angles, or even the data acquired by sensors of different nature, which are considered to be integrated in the network of sensors.

Step d) allows detection of the game events, for example that a foot has touched a ball or the ground, that the ball has touched a racket, a bat or a midfield net, or that a game element is ahead of another game element, such as a runner advancing another runner, or a defense ahead of an attacker, other examples of game events may refer to game elements of the same player, for example detect when both arms of the same player are aligned in a cross, this being an important game event, for example, in gymnastics rings.

Said detection of step d) is carried out detecting changes in position, shape, speed and / or trajectory of the game elements in the temporal sequences of data groups, i.e. detecting changes in their movement or shape indicative for example that a game element has come into contact with another game element that has modified its movement or shape. Alternatively or in addition said detection of step d) is produced by detecting interferences or correlation between different game elements in the temporal sequences of data groups, that is to say detecting when the positional information of a game element enters into interference with the positional information of another game element, thus detecting an impact between both, or detecting when the positional information of a game element acquires a pre-established relative position with respect to another game element, said pre-established relative position preferably being one selected from a list of possible relative positions stored in the memory.

The result of said game event detection is a record of game events with assigned temporary information, i.e. a record of what important events, called game events, have taken place in the game area, and when these game events have taken place. This allows automatic identification of game milestones during step e), said game milestones being detected when there is a sequence of simultaneous game events or in a certain order. These game milestones will correspond to arbitration decisions judging by the proposed method.

As an example, a game milestone could be determining an offside in soccer. In order to determine said game milestone the proposed method shall detect the game event of the ball exiting the attacker's foot, detect the overtaking game event of the most advanced body part of the most advanced attacker, discarding the arms, regarding the most backward defense in the game area. The succession of said two game events in one order determines the game milestone of the offside, but in the reverse order it would not correspond to an offside game milestone. In addition, more game events can be taken into account to determine this offside game milestone, such as whether the ball leaves the foot of the goalkeeper of the attacking team in a goal kick, or of a player from the corner in a corner kick, cases in which there is no offside.

It will be understood that this is only an example and that the proposed method can be applied by an expert to a multitude of different games and to a multitude of possible different game milestones within each game without the need for a detailed description of each case in this document.

Another proposed embodiment suggests that said game event detection of step d) be performed as a consequence of a start trigger, and be performed within a time frame containing a fraction of the time sequences of data groups, wherein said start trigger provides a temporal reference that defines the time frame over which the detection is performed.

That is to say that the search for the game event is only executed in response to a start trigger that provides a time frame on which to perform the detection, allowing further optimization of the analysis resources.

Said start trigger may be, for example:
- a manual detection of a possible game milestone introduced into the system by an operator, said possible game milestone being produced within said time frame indicated by said operator;
- a manual detection of a game event introduced in the system by an operator, said game event being produced at a moment in the game indicated by said operator defining said time frame, said manually detected game event being used in said step e) of detection of game milestones;
- the automatic detection of a relevant sound through at least one microphone integrated in the network of sensors by means of a sound recognition analysis on the data acquired by said microphone; or
- the automatic detection of a game milestone by said step e), said game milestone being indicative of another possible game milestone.

The detection of a possible game milestone indicates the system the time frame in which to execute the analysis in search of game events that later determine a game milestone, thus allowing optimization of the analysis resources. An operator can indicate that within a time frame has occurred, for example in the case of soccer, an offside, a goal, an out-of-band, a fault, a penalty, hands, etc. In the case of other sports such as tennis, other possible game milestones may also be indicated, such as a foot fault, incorrect serve, etc.

The manual detection of a game event by an operator determines the existence of a game event at a particular moment in the game, which triggers the automatic search of other game events within a time frame related to that moment for detection of game milestones by analyzing the combination of the manually detected game event with the automatically detected game events. Said manual detection can be performed, for example, by a slow-motion review of images captured by a camera integrated in the network of sensors.

According to another embodiment, the system automatically searches for, from a manually detected game event, other game events related to said manually detected game event through a shared milestone. That is to say, for example in the case of soccer, when an operator manually determines the exact moment in which the ball is separated from the foot of the attacking player to make a pass, the system analyzes the data obtained from the network of sensors in that same moment to determine if the other game event that would determine a game milestone corresponding to an offside occurs, said other game event being the presence of an attacking player more advanced than the most backward of the defenses.

The aforementioned detected sound may be, for example, an impact sound, such as the sound of a bat or a racket hitting a ball, or it may be the sound of a referee's whistle. In this case, the whistle would perform the analysis and allow advising, corroborating or denying the aforementioned referee in a few seconds.

The manual indication of the possible existence of a game milestone can trigger an analysis of the data collected in a given period prior to said manual indication to then execute the algorithms that detect the corresponding events and milestones within said temporal sequence.

According to another embodiment it is also proposed that the system can analyze in different detail the different game elements depending on their position or their relevance at each moment, thus allowing optimization of the computing resources in the data obtained from the most relevant game elements at every moment. For example, the system can identify the players and the ball, and perform only a detailed identification of the body parts of those players who have the ball, or who are close to it. This reduces the computing power required and facilitates the detection of events in real time.

It is also proposed that the system, based on the analysis of the detected trajectory of certain game elements, such as a ball, can predict its future position. This can allow for example identification of which game elements may be relevant in the immediate future, initiating a detailed identification of those game elements before the ball reaches them.

For example, if in soccer, the prediction of the trajectory of the ball determines that it will pass raised from the ground and close to a defense player located inside the area, the system can initiate the precise identification of the position of the hands and arms of the that player in order to detect a contact with the ball, which would correspond with a penalty milestone.

Finally, the previous detection by the system of a game milestone may be indicative of an additional game milestone related by said previously detected game milestone, which triggers an additional search for other game events by said step d), incorporated in step e) for the detection of additional game milestones. For example, a game milestone may be the detection of a pass between two players of the same team, and this may trigger the search for other game events that allow to verify if said pass has been regulatory, for example by looking for the relative position of the players at the time of the pass in order to automatically determine whether or not there has been an offside, or other offense contrary to the rules of the analyzed game.

Preferably the first execution of step d), whose results determine the detection of a game milestone in step e), is performed in search of game events of a first group of game events. Once said game milestone indicative of another possible game milestone is detected, the additional execution of step d) is performed in search of selected game events of a second group of game events, selected in relation to the possible game milestone indicated for the game milestone already detected.

Alternatively to the realization of said detection as a consequence of a start trigger, the detection of game events of step d) will be performed in real time over all the temporal sequences of data groups.

Another embodiment proposes that step d) be executed in real time by searching for a game event selected from a first group of game events and wherein the detection of a game event of said first group of game events triggers an additional execution of step d) in a time frame related to said game event of the first group detected in search of a game event of a second group of game events being all the detected game events used in step e). For example, a game event of the first group may be the entry of a ball into a scoring area such as a goal, a basketball hoop, or the entry of a ball into an area outside the game field, the impact of a ball on a certain game element, etc. From said detection of game events of the first group another more detailed search of other game events of the second group is executed, for example game events that require greater computing power for its search, within a time frame defined by said game event of the first group. This embodiment allows optimization of the computing resources of the system by performing the search for game events of the second group only when a first detection of game events of the first group indicates the possible presence or relevance of the game events of the second group.

According to another embodiment of the present invention, step d) also includes the detection of interferences between data groups of a game element and boundaries of the pre-stored game area, also detecting game events that are incorporated in the detection of game milestones from step e). That is to say, for example, the detection that a ball has crossed an out-of-band or a midfield line, or area, or goal line will be determined by comparing the position data of the game element with said pre-stored record of the boundaries of the game area, being in this embodiment said boundaries not necessarily detected through the data obtained from the network of sensors, but entered into the memory before the start of the game, simplifying part of the task of analyzing the data obtained by the network of sensors. It will be understood that the position of said boundaries of the game area will correspond to the position of the lines drawn on the ground and that they indicate some boundaries related to game milestones, such as the boundaries where a player may be, or a ball, as in the case of the out-of-band lines in soccer or tennis, or a boundary that determines a different punctuation as it is three-point line in the basketball.

Additionally it is proposed that the notification signal be transmitted by wireless means to a mobile receiver. For example, it can be transmitted to a smart watch, mobile phone, tablet or similar of the referee, providing additional information for decision making. Alternatively said notification signal may be a visual or acoustic signal issued in the form of an alarm or warning, or a signal stored in a register of notification signals.

These remote position sensors can be selected from:
- laser sensors, for example scanning laser sensors, pulse sensors for the simultaneous detection of the position of multiple points, or of a single fixed beam to measure the distance between a point and the laser emitter;
- radars;
- time-of-flight video sensors that obtain positional information by calculating the time it takes for an emitted light to bounce and be captured by said video sensor;
- three-dimensional video sensors composed of several video cameras separated by a known defined distance, the positional information being inferred automatically by the discrepancies between the images captured by said various cameras.

Said remote position sensors offer information indicative of the three-dimensional shape of the game elements thanks to a matrix of positional measurements at different points, the position being all the said points determined at the same moment, or at almost simultaneous moments, with temporary differences of less than one tenth of a second.

Said positional information indicative of the three-dimensional shape will allow recognition of the shape of each game element, and acknowledgment of its position and its displacement over time.

Each of the two video cameras that make up a three-dimensional video sensor will capture different images from different points of view, and the treatment and comparison of said images captured by a three-dimensional recognition computer program will allow calculation of the position of each one of the game elements captured in the images by measuring the differences between the two images.

Additionally or alternatively it is proposed that said network of sensors also include sensors selected from:
- video cameras, wherein during said step b) an analysis of shape and / or color recognition is performed on the data acquired by said video cameras;
- at least one microphone, wherein during said step b) a sound recognition analysis is performed on the data acquired by said microphone for the detection of relevant sounds, indicative of a game event;
- sensors integrated into the game elements, such as position sensors, accelerometers, inclinometers, either integrated into parts of the players, such as wristbands, boots, belts, etc., whether in the ball in case of existing, or other mobile game elements like bats, rackets, etc. or static, like poles. All those sensors integrated into mobile game elements must include a wireless information transmitter to communicate the information obtained to the system.

Said sensors will not offer positional information, but they can provide other complementary information to the positional information obtained from the remote position sensors, such as for example chromatic information of the game elements obtained by the video cameras, or sound information indicative of a game event obtained through the microphones.

The said video cameras and the three-dimensional video sensors described above may be the same sensor that offers both positional information and color information.

The detection of game events of step d) is preferably performed on the temporal sequences of data groups in search of matching patterns with a record of patterns of possible game events pre-stored in the memory. That is to say that within a temporal sequence of data groups relative to a game element already identified in step b), patterns are searched for that reveal a game event, said pattern search being performed in relation to a register of patterns of possible game events pre-stored in the memory of the at least one control device. Thus, the detection of a pattern in the data groups equivalent to a pattern of possible game event determines the existence of a game event in said data group, and therefore the existence of a game event related to said game element at a specific moment.

According to another preferred embodiment, the detection of a game event contained in the register of patterns of possible game events acts as a trigger for a search for additional related game events through a shared game milestone with said detected game event, being the patterns of said additional game events detected in comparison with a pattern register of possible additional game events, and said searching of additional game events within a time frame containing a fraction of the temporal sequences of data groups at least simultaneous to the trigger.

That is, once a game event is detected, other additional game events that are related to said detected game event are determined through a shared game milestone, for example the detection of the game event of a soccer penalty kick will be related to the game event of the non-entry of other players in the area until after said kick is performed. Therefore, after the detection of the first game event, a specific search is made of the other additional game events related to the first one within a time frame defined by said initial game event, this time frame being at least partially retrospective, containing data groups prior to the initial game event.

This allows optimization of the analysis resources allowing a first search of game events and only after the detection of any of these game events proceed to search for other additional game events but only within the defined time frame.

It is also proposed to generate, for each game element detected in the game area, statistical data related to said game element obtained from the detected game events related to said game element. This allows to automatically generate statistics relative to each game element, or groups of game elements, which can be useful both at an informative level and at the analysis level to improve the performance of the athletes present in the game area.

Preferably said statistical data is transmitted in real time to a remote storage device, for example a server of betting houses, journalists or sports commentators, sports media, such as televisions, radios or newspapers, etc.

The game events and / or game milestones detected can feed in real time an augmented reality system that superimposes visual information related to said game events and / or said game milestones on real images of the game area.

That is to say that said game events and / or detected game milestones can feed in real time an augmented reality system that superimposes visual information related to said game events and / or game milestones on real images of the captured game area through integral cameras of the network of sensors. Examples of possible data fed by said augmented reality system can be: information about the amount of time a player is in possession of the ball, the faults committed or received, the time played, the number of passes made or received, the number of shots to goal, etc.

Said analysis of step b) is preferably carried out on the data captured by the network of sensors in search of matching patterns with a record of patterns of possible game elements pre-stored in the memory, said register being able to contain shape, color and / or position patterns of possible game elements.

That is to say, the recognition of the captured data groups related to a game element and indicative of which game element is made by analyzing said data in search of matching patterns with a record of patterns of possible pre-stored game elements, preferably detecting shape, color and / or position of said game elements.

By way of example, it may be indicated that all those data relating to a spherical object will be indicative of a data group relating to a game element identified as a ball. Likewise the shape of a bat or racquet will be characteristic and identifiable, even the shape of a boot, hand, or head will be easily recognizable. Even the shape of a number printed on the player's shirt can be recognized by the proposed method for the identification of said individual player as a game element or as a set of multiple game elements including his feet, knees, hands, elbows, shoulders, head, torso, etc.

The color information can be helpful for identification, for example the white color of the ball will help in its detection, or the color of the clothes of the players or the referee can be used by the system to discern between one and the other.

Also the positional information can be used for the detection and recognition of the game elements. For example, the feet of the players will be, generally, near or above the ground.

In some sports such as baseball, each player has an assigned position within the playing area, such as the pitcher, the receiver, the first baseman, the second baseman, etc., therefore the detection of a data group within one of said positions will undoubtedly correspond to a game element related to each of said players, thus facilitating their recognition.

It is further proposed that during the analysis of step b) a detection of data groups relative to a game element be made in the data coming from a remote position sensor, and wherein the positional information of said game element obtained from said remote position sensor is compared with the positional information existing in the data of the other remote position sensors detecting a spatio-temporal coincidence between said compared data, assigning said detection of data groups relative to a game element to all the data groups of all the remote position sensors with spatio-temporal coincidence.

That is, the detection of a game element in a data group from the data coming from an individual remote position sensor is automatically used to assign other data groups obtained from other sensors to that same game element if there is spatio-temporal correspondence between said data groups of different sensors. In other words, if two remote position sensors detect positional data in the same space and time, and the analysis of the data of one of the remote position sensors determines that said data is a data group relating to for example a ball, the data of the other sensors obtained from that same space and time will also correspond to data of said ball, without the need for an additional analysis of said data.

It is also contemplated that said analysis of step b) is carried out on data obtained at different moments, and that the detection of a game element at a moment is used to perform the detection of said game element at different moments, by monitoring of the position of said game element. That is to say, the detection of a game element at a moment makes the detection unnecessary in other subsequent or previous moments, being able to track the trajectory of said game element from the moment in which its identification has been carried out maintaining the identification without requiring additional analysis while maintaining the detection of their trajectory by analyzing the data obtained, this tracking of the trajectory being a much simpler calculation than the identification of the game element and therefore optimizing the resources.

A second aspect of the present invention concerns a computer program that includes code instructions that when executed in a computer system, equipped with at least one control device with a memory and with computing power, implement the method of either of claims 1 to 14 described in relation to the first aspect of the present invention.

Preferably said code instructions include analysis algorithms configured to analyze the data obtained from each individual sensor detecting the presence of data groups relating to game elements and identifying the game element to which said data groups correspond, placing said groups in correspondence of data referring to the same game element, grouping in a temporal sequence all the data groups provided by different sensors corresponding to the same game element in temporal coordination.

Said analysis algorithms are preferably also configured to detect game events of several game elements in several temporal sequences of data groups by:
- the detection of changes in position, shape, speed and / or trajectory of the game elements in the temporal sequences of data groups;
- the detection of interferences or correlation between different game elements in the temporal sequences of data groups;
or a combination thereof, and

Said analysis algorithms can be additionally configured to detect game milestones by automatically detecting sequences of game events, simultaneous or consecutive, coinciding with sequences of game events pre-stored in the memory corresponding to possible game milestones, triggering a notification signal.

A third aspect of the present invention concerns a system for automatic arbitration that includes at least:
- a network of sensors formed by individual sensors capable of obtaining positional information of players present in the game area;
- at least one control device equipped with a memory and with computing power for the analysis of the information obtained from the network of sensors;

The invention proposes that said individual sensors include remote position sensors capable of remotely obtaining positional information of players present in the game area without requiring the installation of sensors or reflectors or emitters of any kind on the players, said remote position sensors being arranged around a game area and directed towards game elements within said game area;
the at least one control device implements analysis algorithms obtained by means of learning algorithms that automatically detect patterns in examples related to game events or game milestones to be detected, or in a large data source, by means of deep learning, big data or data mining techniques, and is configured to identify the different game elements present in the game area and to detect game events by:
- the detection of changes in position, shape, speed and / or trajectory of the game elements in the temporal sequences of data groups; or
- the detection of interferences or correlation between different game elements in the temporal sequences of data groups; or
- a combination of thereof,
the at least one control device stores sequences of events corresponding to possible game milestones related to game rules or with circumstances predefined by the user and is configured to detect said stored milestones from the analysis of the detected events.

Thus, said at least one control device constitutes a computer system configured to execute a computer program that includes code instructions that implement the method described in relation to the first aspect of the present invention.

Preferably said code instructions include analysis algorithms that are configured to analyze the data obtained from each individual sensor detecting the presence of data groups relating to game elements and identifying the game element to which said data groups correspond, placing said data groups referred to the same game element in correspondence, grouping in a temporal sequence all the data groups provided by different sensors corresponding to the same game element in temporal coordination.

It is also proposed that these algorithms are the result of learning algorithms, for example through the automatic detection of patterns within a large data source, by techniques known as big data or data mining, or by means of the automatic detection of patterns within data supplied with examples related to game events or game milestones to be detected, using techniques known as deep learning. Obviously said feature may also be related to the first and second aspects of the invention.

Optionally, it is contemplated that the network of sensors may also include individual sensors integrated into fixed elements of the game area, such as for example the goalposts, boards or hoops, nets, posts, walls or floors, etc. These sensors can provide positional information obtained remotely, or they can provide other information such as temporary information of one impact, or another.

It is also contemplated that, additionally or alternatively, the network of sensors includes individual sensors that provide non-positional information integrated into the game elements, i.e. sensors that provide other information, such as the vital constants of the players. This additional information may be used for statistical or other purposes.

Other features of the invention will appear in the following detailed description of an exemplary embodiment.

### Brief description of the drawings

The foregoing and other advantages and features will be more fully understood from the following detailed description of an exemplary embodiment with reference to the accompanying drawings, which should be taken by way of illustration and not limitation, in which:

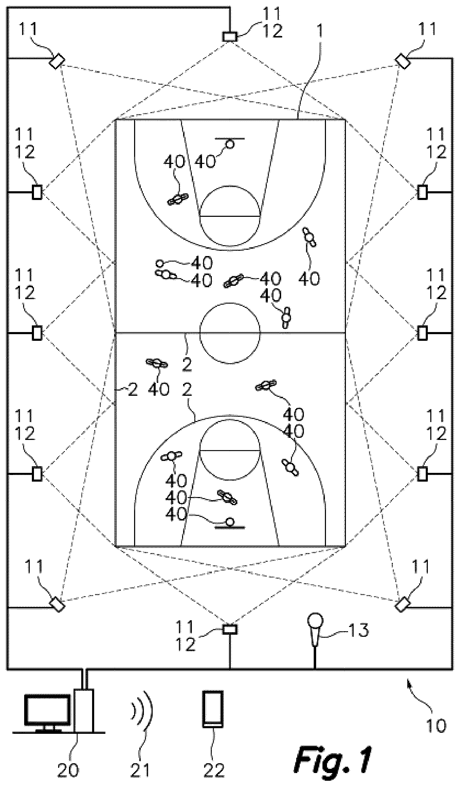

Fig. 1 shows a schematic plan view of a game area which, as an example, shows a basketball court with its corresponding boundaries, containing several game elements corresponding to five players of each team, one ball and two hoops, around said game area have schematically illustrated a network of sensors composed of twelve remote position sensors and a microphone arranged around the game area, oriented towards the interior of the game area, indicating in dashed line the area controlled by each individual sensor;

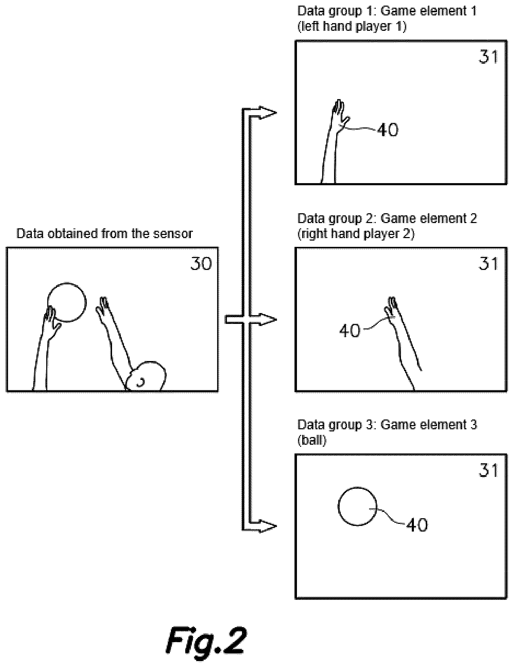

Fig. 2 schematically shows part of step b) applied to data indicative of the three-dimensional shape of the game elements, exemplified here in the form of an image that is assumed to be three-dimensional, in which said image contains various game elements and it is analyzed and disaggregated into data groups assigned to each of said game elements;

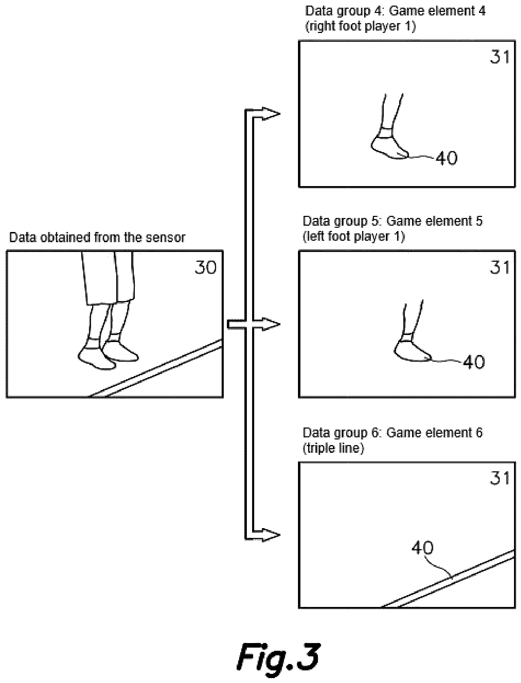

Fig. 3 shows the same as Fig. 2 but applied to data obtained through another sensor, showing different game elements;

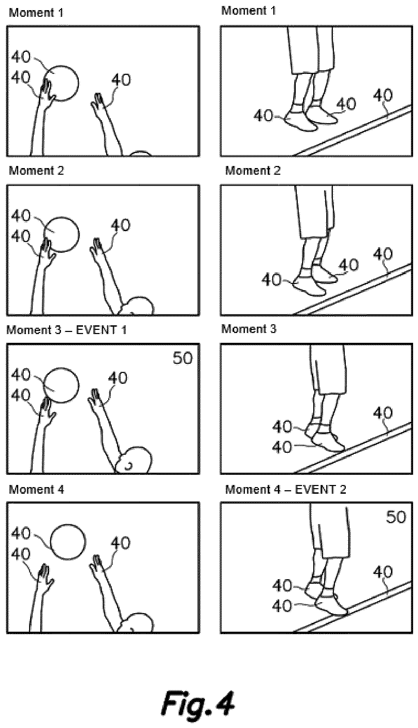

Fig. 4 schematically shows steps c), d) and e), showing how the data sequences are temporally correlated and how game events corresponding to each of the analyzed game elements are detected, and how said game events are arranged in a sequence that allows identification of the game milestones;

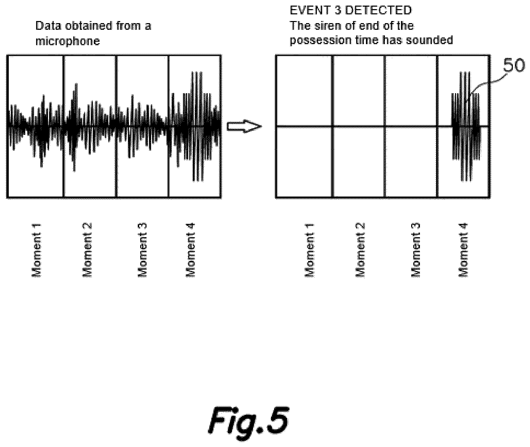

Fig. 5 shows how other additional data are also analyzed in search of game events, in this example audio data captured by the microphone of the network of sensors are analyzed by detecting the presence of an audio pattern corresponding to a game event that in this example is the sound of the siren of the end of the possession time;

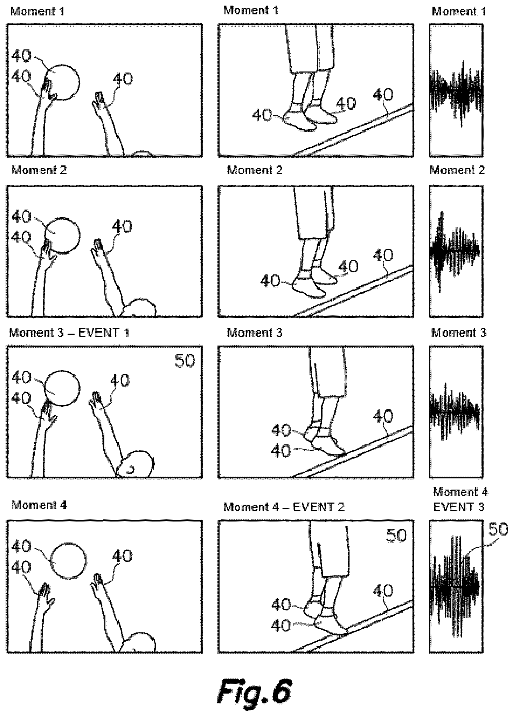

Fig. 6 shows how said game event detected in the microphone data is placed in correspondence with the other data sequences allowing other additional game milestones to be detected.

### Detailed description of the invention

The attached figures show examples of embodiments of the present invention with non-limiting illustrative character.

Fig. 1 shows a game area 1 corresponding to a basketball court. It will be understood that any other game area 1 may be used in its place, such as soccer, American football, baseball, cricket, handball, hockey, volleyball, tennis, paddle fields or athletic, jumping, shot put, gymnastics tracks or diving, synchronized swimming pools, etc.

The game area 1 shown is surrounded by a network of sensors 10 comprising thirteen individual sensors 11 of which eight are remote position sensors 12 and one is a microphone 13. Obviously the number and position of the individual sensors 11 may be another without this affecting substantially the present invention. Said remote position sensors 12 can be for example scanning laser sensors, high precision radar sensors, or three-dimensional video sensors, the use of scanning laser sensors being the preferred embodiment.

Although the data 30 obtained by said remote position sensors is data indicative of the three-dimensional shape of the game elements, i.e. three-dimensional information. In the following figures, said three-dimensional data obtained in the form of a two-dimensional image has been shown in a simplified manner to facilitate its understanding.

Fig. 2 shows, in a first box, a two-dimensional representation of the data 30 obtained at a given moment by one of the remote position sensors 12, said data 30 containing information relative to three game elements 40 corresponding to the right hand of a first player, the left hand of a second player and the ball.

Said data 30 is supplied to at least one control device 20 which, by means of the application of analysis algorithms, analyzes said data 30 detecting the presence of data groups 31 relative to individual game elements 40 and identifying the game element 40 to which said data groups 31 correspond. In the present example, said analysis allows to automatically identify the data groups 31 corresponding to each of said three game elements 40, for example by means of an analysis of the shape of each of said game elements 40 that allow identification of the characteristic shape of a hand and a ball, as well as distinguishing to which player that hand corresponds thanks to the recognition of the color of the shirt of said player and / or of the number and / or name printed on said shirt, or to other distinctive morphological characteristics of each individual player, such as height, hairstyle or characteristic hair color, etc.

Next, all the aforementioned data groups 31 relating to the same game element 40 are placed in correspondence, which will mainly correspond to data groups 31 of the same game element 40 obtained from different individual sensors 11, being part of the redundant information, for example the positional information, which allows identifying said correspondence facilitating said operation and avoiding having to carry out an automatic identification of all the data of each of the individual sensors 11 since an identification in the data of an individual sensor 11 allows, by means of said correspondence, to avoid having to make said identification with the data of the remaining individual sensors 11.

Fig. 3 shows an operation equivalent to that shown in Fig. 2 but applied to other data 30 relative to other game elements 40 obtained by another remote position sensor 12. In this case the game elements 40 identified are the right and left feet of the first player and the three-point line.

Alternatively, the position of the boundary of the three-point line can be pre-stored in the memory, making it unnecessary to detect and identify said line in the data obtained from the network of sensors 10.

Fig. 4 shows the three time sequences of data groups 31 obtained from the analysis represented in Fig. 2 correlated, represented here in the form of a newly integrated two-dimensional image, and how said temporal sequences contain information of different successive moments of the game, which has been simplified here as four sequential images. The analysis carried out by said at least one control device 20 by means of the application of analysis algorithms allows identification of the moment in which the ball separates from the hand of the first player; thus determining that at moment three a first game event 50 occurs.

In an equivalent manner the three time sequences of data groups 31 obtained from the analysis shown in Fig. 3 have also been correlated with each other and in temporal coordination with the remaining time sequences. Its analysis determines that at moment four the right foot of the first player steps on the three-point line, thus determining that this is a second game event 50.

Therefore it can be determined that the throw of the ball has occurred, by the first player, before said first player stepped on or surpassed the three-point line, since the third moment is before the fourth moment. Therefore it can be concluded that a game milestone has occurred, corresponding to a valid three-pointer.

The analysis in search of the second game event 50 can be triggered as a result of the detection of the first game event 50. That is to say that upon detecting that the ball leaves the hands of the first player the system reviews a time frame close to that moment in time to search for a game event 50 related to the position of his feet, thus detecting the second game event 50.

The first game event 50 detected, corresponding to the separation of the ball from the hands of the player, can also be searched by the system as an automatic response to a start trigger, for example the entry of the ball into the hoop. Said game event 50 of scoring a basket can trigger the search for the moment in which the ball leaves the player's hands retroactively and one also looking for the event of the player's feet stepping on or exceeding the three-point line. Once both game events are detected, as a consequence of the detection of the entry of the ball into the hoop, the sequence in which said game events 50 have occurred is verified to determine if there has been a three-pointer game milestone.

On the contrary, the system can search in real time all the possible game events 50 simultaneously, detecting them as they happen.

Fig. 5 shows, in the form of an acoustic wave, a sequence of audio data captured by a microphone 13 integral with the network of sensors 10.

The analysis of said audio data 30 allows detection of a sound identified as the siren at the end of the possession time, by detecting a pattern in the acoustic wave coincident with a pre-stored pattern of the sound of said siren, so that it is determined that this is a third game event 50 that happens in a fourth moment.

In Fig. 6 the same analysis is performed as in Fig. 4 but adding the audio data shown in Fig. 5, each time fraction of said data 30 being coordinated with the time fraction of the remaining data 30.

As a result, the method detects a game milestone of a valid three-point shot thanks to the detection of the shot in the third previous moment both at the end of the possession time and to surpass the three-point line, both events occurring in the fourth moment. All this determines a game milestone of valid three-point shot.

A further detection of a fourth game event corresponding to the entry of the ball into the hoop would determine a game milestone of three-point basket being the three-point shot valid.

As will be obvious, the measurement of the possession time can also be done by the proposed automatic arbitration method, so that the detection of the game event 50 of the end of the possession time could be done internally as a further game event 50.

Many other examples could be exposed, for example the valid kick of a fault in soccer without the players of the barrier leaving their position ahead of time, or a valid penalty kick also in soccer without any player entering the game area before time, or in tennis a valid serve without the player stepping on the line before hitting the ball, etc.

In other embodiments, the detection of game events 50 can be determined for example by detecting a sudden change in the trajectory or speed of a game element, if for example a ball suddenly changes its trajectory or speed it is indicative that another game element 40 has hit it, or touched the ground. In the same way, a bat or racket will also see its trajectory or speed altered when it hits the ball. Said impact could also produce an alteration of the shape of the game element 40, for example a ball could temporarily lose its spherical shape during the impact.

Furthermore, the proposed method makes it possible to know the position of each game element 40 through the captured data groups 31, in this way in the event that two game elements 40 come into contact with said positional data of the corresponding data groups 31 they will at least partially coincide, thus demonstrating that this contact has occurred and the game event 50 is detected.

Some game events do not require contact between different game elements 40. For example, the offside in soccer requires a relative position between the most advanced parts of the body of two players in relation to the field, excluding the arms, similar to the arrival at the finish line of the races. In other sports the measurement of the relative position between two body parts of the same player can be relevant, as for example in the disciplines of gymnastics. In all these cases, said game event 50 will be determined by analyzing the positional data contained in the corresponding data groups 31 of the time sequences of each game element 40, analyzing their relative positions, their correlations or their interferences.

The detection of a game milestone will trigger a notification signal 21 that will preferably be transmitted by wireless means to a mobile receiver 22 such as a tablet, telephone or smart watch in the hands of a referee.

It will be understood that the different parts constituting the invention described in one embodiment can be freely combined with the parts described in other different embodiments although said combination has not been explicitly described, provided that there is no harm in the combination.

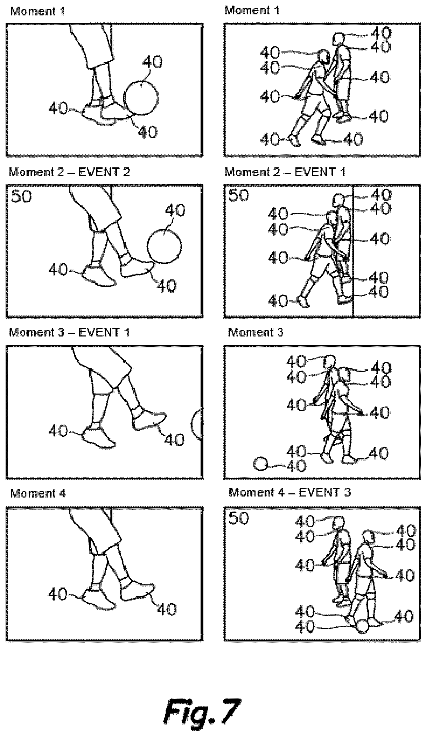

Next, other exemplary embodiments relating to the automatic detection of game milestones corresponding to an offside in a soccer game, shown in FIG. 7, are set forth below.

According to one embodiment, the system analyzes the captured data by detecting the presence of data relating to the different game elements 40 and identifying them, which in this case will correspond to the different parts of the bodies of the attacking and defending players as well as the ball, breaking said data 30 into data groups 31 and grouping the data groups 31 relative to the same game element 40 obtained from different individual sensors 11 in the same temporal sequence.

The system constantly analyzes the data groups 31 looking for at least one game event 50 for the start of the pass of the ball, a game event for receiving the pass of the ball, and an anti-regulation position game event for each of the attacking players with respect to the most backward defense. The game milestone corresponding to the offside will be determined if, in this order, the game events corresponding to a player's anti-regulation position (called positional offside) are detected, at the start of the pass, and upon reception of said pass by said player in an anti-regulation position, or if it is determined that at the time of the start of the pass the player who will receive said pass is in an anti-regulation position.

In the example shown in Fig. 7 it can be seen how at moment 2 the ball separates from the foot of the player who starts the pass, at which point a game event 50 corresponding to a start of the pass of the ball has been determined. It is also determined that at a time before moment 2 and after moment 1 an attacking player advances with the end of his foot the position of the player of the most backward defense, determining an anti-regulation position of said player before the start of the pass of the ball. Finally at moment 4 a game event 50 is detected corresponding to a reception of the pass of the ball by the attacking player that has been previously determined to be in an anti-regulation position. Therefore the detected game events are, in chronological order, a player in an anti-regulation position, a pass start, and a reception of the pass by said player in anti-regulation position, which determines a game milestone corresponding to an offside, which is automatically warned by the system by means of an alarm signal, for example transmitted to a smart watch of the referee.

According to an alternative embodiment, at least one game event 50 for the start of the pass of the ball and a game event 50 for receiving the pass of the ball will be automatically searched in the time sequences, but not a game event 50 for anti-regulation position of each of the attacking players with respect to the most backward defense.

The detection of a game event 50 for the start of the pass of the ball and a game event 50 for reception of the subsequent pass of the ball will be identified by the system as a game milestone corresponding to a pass.

The system will be configured so that the detection of a game milestone corresponding to a pass is a trigger for the verification of the existence or not of an offside, so that detection of a game milestone corresponding to a pass triggers the analysis of the relative position of the player receiving the pass with respect to the most backward defense at the instant of the first game event 50 detected corresponding to the start of the pass, thus detecting whether there is another game event 50 corresponding to the anti-regulation position of the attacker with respect to the defense at that time, thus determining the existence or otherwise of a game milestone corresponding to an offside. This realization requires less computing power, because it is only necessary to detect the relative position of an attacking player with respect to the most backward defense when he receives the pass and only at a certain moment.

Another embodiment provided for the detection of an offside is that an operator indicates to the system a time frame of reference within which it is suspected that an offside has existed, for example a time frame comprised between moments 1 and 4, and the system applies any one of the two alternative methods of analysis described above but only with respect to the data contained within said time frame, thus achieving a greater optimization of the available computing resources.

Alternatively said operator can determine, by a slow-motion examination of images captured by a camera integrated in the network of sensors 10, the exact moment at which the game event 50 corresponding to the start of the pass occurs, i.e. the moment in which the ball leaves the foot of the attacking player, which in the example shown in Fig. 7 corresponds to moment 2. Once the existence of a triggering game event 50 corresponding to a start of the pass of the ball has been determined manually, the system automatically determines by analyzing the data 30 captured in search of game events 50 the game event 50 corresponding to the reception of the pass, thus determining which player is receiving the pass, and the game event 50 corresponding to the anti-regulation position or not of said player receiving the pass at the time of the game event 50 corresponding to the start of the pass of the ball determined or manually, that is, if said player was in an anti-regulation position at the time of said start of the pass of the ball, thus automatically determining whether or not a game milestone corresponding to an offside existed.

Similarly, the system can be used for the automatic detection of a correct fault kick, detecting at least game events 50 relating to the start of the kick, when the ball leaves the foot of the player, and relative to the position of the defense at least 9,15m away from the point of the kick of the ball, and a search of other game events may also be carried out such as the entry of the ball into the goal, or the contact of the ball with another player other than the one who throws the fault, etc. Said detected game events 50 can be detected in real time, or within a time frame indicated by an operator, or one of them being detected manually by an operator, or its search being initiated as a result of a trigger. In this case, the trigger could be, for example, the detection, by means of a microphone 13 integrated in the network of sensors 10, of the sound of the referee's whistle indicating that the kick can be carried out.

Likewise, the system can be used for the automatic detection of a correct penalty kick, detecting game events 50 relating to the start of a penalty kick, when the ball leaves the player's foot, relative to the goalkeeper's position on the goal line, relative to the position of the other players outside the area, and relative to the entrance of the ball into the goal. Said detected game events 50 can be detected in real time, or within a time frame indicated by an operator, one of them being detected manually by an operator, or the search being initiated as a result of a trigger.

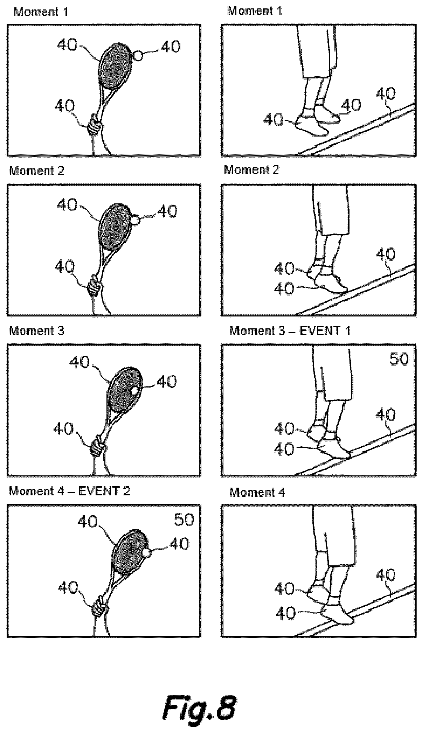

Obviously the proposed method and system can be applied to other sports and to the detection of other different game milestones. For example in tennis a game milestone relative to a foot fault, shown in Fig. 8, can be detected by detecting game events 50 relating to the start of the service, when the ball separates from the racket, and relative to the position of the feet of the player who makes the service with respect to the baseline of the court. If the entry of one of the player's feet into the game area is detected before the start of the service, it is determined that there is a game milestone corresponding to a foot offense, otherwise a valid service milestone will be determined. Said detected game events 50 can be detected in real time, or within a time frame indicated by an operator, one of them being detected manually by an operator, or the search being initiated as a result of a trigger.

In the example shown in Fig. 8 the system automatically detects a game event 50 corresponding to an entry of a foot of the player in the game area, stepping on the bottom line, at moment 3, simultaneous to the impact of the ball on the racket. However, the game event 50 corresponding to the start of the serve, when the ball is separated from the racket, does not occur until moment 4. Therefore, it is automatically determined that there is a game milestone corresponding to a foot fault, therefore a null serve.

## Claims

1. Automatic arbitration method implemented through a system that integrates at least:
• a network of sensors (10) formed by individual sensors (11) including remote position sensors (12) able to remotely obtain positional information of game elements present in the game area without requiring the installation of sensors or reflectors or emitters of any kind in the game elements, said remote position sensors (12) being arranged around a game area (1) and directed towards game elements within said game area;
• at least one control device (20) provided with a memory and with computing power for the analysis of the information obtained from the network of sensors (10);
**characterized in that** said method includes the following steps:
by means of said network of sensors (10):
a) acquire data (30) relating to several game elements (40) simultaneously, said data including positional and time information;
and by means of an analysis of the acquired data executed by the at least one control device (20) by means of the application of some analysis algorithms obtained by means of learning algorithms:
b) analyze the data (30) acquired by each individual sensor (11) detecting the presence of data groups (31) relating to game elements (40) and identifying the game element (40) to which said data groups (30) correspond, placing in correspondence said data groups (30) referred to a same element of the game (40);
c) group in a temporal sequence all the data groups provided by different individual sensors (11) corresponding to the same game element (40) in temporal coordination;
d) detect game events (50) of several game elements (40) in several time sequences of data groups (31) by:
• the detection of changes in position, shape, speed and / or trajectory of the game elements (40) in the temporal sequences of data groups (31); or
• the detection of interferences or correlation between different game elements (40) in the temporal sequences of data groups (31); or
a combination thereof, and
e) detecting game milestones by automatically detecting sequences of game events (50), simultaneous or consecutive, coinciding with sequences of game events (50) pre-stored in the memory corresponding to possible game milestones related to rules of pre-stored games or with circumstances predefined by the user, triggering a notification signal (21).

2. Method according to claim 1, wherein the detection of game events (50) of step d) is performed as a consequence of a start trigger, and is performed within a time frame containing a fraction of the time sequences of data groups (31), wherein said start trigger provides a temporal reference that defines the time frame over which the detection is performed.

3. Method according to claim 2 wherein said start trigger is:
• a manual detection of a possible game milestone introduced into the system by an operator, said possible game milestone being produced within said time frame indicated by said operator;
• a manual detection of a game event (50) introduced into the system by an operator, said game event (50) being produced at a time in the game indicated by said operator defining said time frame, said game event (50) being manually detected used in said step e) of detection of game milestones;
• the automatic detection of a relevant sound through at least one microphone (13) integrated in the network of sensors (10) by means of a sound recognition analysis on the data acquired by said microphone (13); or
• the automatic detection of a game milestone by said step e), said game milestone being indicative of another possible game milestone.

4. Method according to claim 1, wherein the detection of game events (50) of step d) is carried out in real time on all time sequences of data groups (31).

5. Method according to claim 1, wherein step d) is executed in real time by searching for a game event selected from a first group of game events and wherein the detection of a game event of said first group of game events triggers as a detonator an additional execution of step d) in a time frame related to said game event of the first detected group in search of a game event of a second group of game events being all detected game events used in step e).

6. Method according to any one of the preceding claims, wherein step d) further includes detecting interference between pre-stored data groups (31) of a game element (40) and boundaries (2) of the game area (1), also detecting game events (50) that are incorporated in the detection of game milestones of step e).

7. Method according to any one of the preceding claims, wherein the notification signal is transmitted by wireless means to a mobile receiver (22).

8. Method according to any one of the preceding claims, wherein said remote position sensors (12) are selected from:
• laser sensors;
• radars;
• time-of-flight video sensors;
• three-dimensional video sensors composed of several video cameras separated by a known defined distance, the positional information being inferred automatically by the discrepancies between the images captured by said various cameras;

9. Method according to any one of the preceding claims, wherein said network of sensors (10) further includes individual sensors (11) selected from:
• video cameras, wherein during said step b) an analysis of shape and / or color recognition is performed on the data (30) acquired by said video cameras;
• at least one microphone (13), wherein during said step b) a sound recognition analysis is performed on the data acquired by said microphone (13) for the detection of relevant sounds, indicative of a game event (50) ;
• sensors integrated into the game elements (40).

10. Method according to any one of the preceding claims, wherein the detection of game events (50) of step d) is performed on the temporal sequences of data groups (31) in search of matching patterns with a record of patterns of possible game events pre-stored in the memory.

11. Method according to any one of the preceding claims, wherein for each game element (40) detected in the game area (1), statistical data related to said game element (40) obtained from the game events (50) detected related to said game element (40) are generated.

12. Method according to claim 11 wherein said statistical data is transmitted in real time to a remote storage device.

13. Method according to any one of the preceding claims, wherein the game events (50) and / or detected game milestones feed in real time an augmented reality system that superimposes visual information related to said game events (50) and / or said game milestones on real images of the game area.

14. Method according to any one of the preceding claims, wherein:
• said analysis of step b) is performed on the data in search of matching patterns with a record of patterns of possible game elements pre-stored in the memory; or
• said analysis of step b) is performed on the data in search of matching patterns with a record of patterns of possible game elements pre-stored in the memory, which contains patterns of shape, color and / or position of possible elements of game.

15. Method according to any one of the preceding claims, wherein during the analysis of step b) a detection of data groups (31) relative to a game element (40) is performed on the data coming from a remote position sensor (12), and wherein the positional information of said game element (40) obtained from said remote position sensor (12) is compared with the positional information existing in the data of the other remote position sensors (12) detecting a spatio-temporal coincidence between said comparative data, said detection of data groups (31) relating to a game element (40) assigning all data groups (31) of all remote position sensors (12) with spatio-temporal coincidence.

16. Method according to any one of the preceding claims, wherein said analysis of step b) is performed on data obtained at different moments, and wherein the detection of a game element (40) at a moment is used to perform the detection of said game element (40) at different moments, by tracking the position of said game element (40).

17. Method according to any one of the preceding claims, wherein said step a) further includes acquiring data (30) relating to several game elements (40) simultaneously, said data including information indicative of the three-dimensional shape of the game elements (40).

18. Method according to any one of the preceding claims, wherein the system, after identifying different game elements, selects from among the game elements identified that or those most relevant according to the programming of the system and performs a more precise and / or detailed detection and / or identification of those game elements and / or the game elements that are around them.

19. Method according to any one of the preceding claims, wherein the system after identifying different game elements, predicts the trajectory of at least one of said game elements and predicts possible future events related to said game element.

20. Method according to claim 19 wherein the system identifies other game elements arranged in or adjacent to the intended path and wherein said system performs a more precise and / or detailed detection and / or identification of said game elements.

21. Method according to any one of the preceding claims, wherein the system is configured to individually identify each body part of a player as game elements and to generate an analysis of the relationship between said body parts producing a virtual recreation of a simplified skeleton of the player that will become part of the data groups obtained from the different sensors.

22. System for implementing an automatic arbitration method that integrates at least:
• a network of sensors (10) formed by individual sensors (11) capable of obtaining positional information of players present in the game area;
• at least one control device (20) provided with a memory and with computing power for the analysis of the information obtained from the network of sensors (10);
**characterized in that**:
said individual sensors (11) include remote position sensors (12) capable of remotely obtaining positional information of game elements present in the game area in the absence of sensors or reflectors or emitters of any kind in the game elements, said remote position sensors (12) being arranged around a game area (1) and directed towards game elements within said game area;
the at least one control device (20) implements analysis algorithms obtained by learning algorithms, and is configured to identify the different game elements present in the game area and to detect game events by:
• the detection of changes in position, shape, speed and / or trajectory of the game elements (40) in the temporal sequences of data groups (31); or
• the detection of interferences or correlation between different game elements (40) in the temporal sequences of data groups (31); or
• a combination thereof,
the at least one control device (20) stores sequences of events corresponding to possible game milestones related to game rules or with circumstances predefined by the user and is configured to detect said stored milestones from the analysis of detected events.

23. System according to claim 22 wherein the network of sensors (10) further includes individual sensors (11) integrated into fixed elements of the game area and / or individual sensors (11) integrated into the game elements that provide non-positional information.

24. Computer program that includes code instructions obtained by means of learning algorithms that when executed in a computer system implement the method of any of claims 1 to 21, the computer system being provided with at least one control device (20) with a memory and computing power, and being connected to a network of sensors (10) formed by individual sensors (11) including remote position sensors (12) capable of remotely obtaining positional information of game elements present in the game area without requiring the installation of sensors or reflectors or emitters of any kind in the game elements, which provide data (30) relating to several game elements (40) simultaneously, said data including positional and time information.
